# EUROPEAN PATENT SPECIFICATION

(11) **EP 1 690 704 B1**
(45) Date of publication and mention of the grant of the patent: **11.03.2009**
(21) Application number: 04793269.4
(22) Date of filing: 25.10.2004
(51) Int. Cl.: B60C 17/06

(54) **TIRE WHEEL ASSEMBLY**
RADANORDNUNG MIT REIFEN
ENSEMBLE PNEUMATIQUE-ROUE

(30) Priority: 27.10.2003 JP 2003366099; 18.02.2004 JP 2004041762
(43) Date of publication of application: 16.08.2006
(73) Proprietor: THE YOKOHAMA RUBBER CO., LTD., Tokyo 105-8685 (JP)
(72) Inventor: HOTAKA, Takeshi c/o The Yokohama Rubber Co., Ltd., Hiratsuka-shi, Kanagawa 2548601 (JP)
(74) Representative: HOFFMANN EITLE
(86) International application number: PCT/JP2004/016168
(87) International publication number: WO 2005/039898

(56) References cited:
- JP-A- 10 297 226
- JP-A- 11 060 820
- JP-A- 2001 519 279
- JP-A- 2004 051 009
- JP-A- 2004 352 077

## Description

### TECHNICAL FIELD

The present invention relates to a tire wheel assembly to be used for a pneumatic tire enabling limited driving in a damaged or deflated state (hereinafter referred to as a "run flat tire"). More specifically, it relates to a tire wheel assembly having improved bondability of the contact parts of a ring-shaped metal shell and rubbery elastic members of a run flat support member composed of a ring-shaped metal shell and rubbery elastic members provided at the inside cavity of the tire/rim.

### BACKGROUND ART

There is a need for a pneumatic run flat tire having an emergency driving capability able to be driven on, for a certain distance, even if the inside pressure of the tire rapidly drops due to the punctured or bursting of the tire during driving of the automobile, etc. Numerous proposals have been made to meet this need. As such proposals, for example, Japanese Unexamined Patent Publication (Kokai) No. 10-297226 and Japanese National Publication (Tokuhyo) No. 2001-519279 propose technology attaching a run flat support member (i.e., mandrel) on the rim at the inside cavity of the pneumatic tire, whereby a punctured or otherwise damaged pneumatic tire is supported to enable run flat driving.

The above-mentioned run flat support member has a ring-shaped member having the outer circumference as a support surface, has elastic rings attached to the two legs thereof and has the support member supported on the rim through the elastic rings. The technology using the above run flat support member enables the use of the wheels/rims of conventional general pneumatic tires, as they are, without making any special modifications to the wheels/rims, and therefore, has the advantage capable of using conventional pneumatic tire production, processing and mounting facilities as they are.

As opposed to this, as a typical method, there is also technology reinforcing the sidewalls to enable run flat driving, but this has the problem that sufficient performance cannot be exhibited in tire sizes having high tire cross-sectional heights. As technology providing a mandrel in the inside cavity of the tire as explained above, there is technology making the mandrel solid, but this has the problem that, since the mandrel has no flexibility, it is difficult to mount. Further, there are proposals using special rim structures or special tire structures, but this has the problem that neither the tires nor the wheels have general applicability, and therefore an excessive burden is placed on the user.

On the other hand, technology using a run flat support member is superior, in terms of general applicability, and ease of mounting, but the bonding strength at the contact surfaces between the elastic rings and the ring-shaped member has a large effect on the durability of the run flat support member and greatly influences the durability. Therefore, to improve the durability of the run flat support member and to increase the run flat driving distance, it is necessary to improve the bondability between the surface of the metal shell and the rubber elastic member of the support member and the durability thereof.

### DISCLOSURE OF THE INVENTION

The present inventors previously proposed technology for improving this bondability in, for example, Japanese Patent Application No. 2002-271795 (filed on September 18, 2002) (i.e., Japanese Unexamined Patent Publication (Kokai) No. 2004-106692) etc. The present invention attempts to further improve on this proposal.

Accordingly, the objects of the present invention are to further improve the bondability of the ring-shaped metal shell and the rubbery elastic members forming the run flat support member of the run flat tire wheel assembly and to improve the durability and run flat driving capability of the run flat support member.

In accordance with the present invention, there is provided a run flat tire wheel assembly comprising a run flat support member formed by a ring-shaped metal shell and rubbery elastic members inside an inside cavity of a tire/rim, wherein the rubbery elastic members comprise a rubber composition comprising (A) 100 parts by weight of a diene-based rubber and (B) (i) 0.1 to 5 parts by weight of cobalt acetyl acetonate and/or (B) (ii) (a), as a reinforcing filler, 40 to 90 parts by weight of carbon black/silica in a ratio of 10/1 to 1/2 (weight ratio) and (b) 1 to 20% by weight, based upon the weight of the silica, of a silane coupling agent, whereby the bondability between the ring-shaped metal shell and the rubbery elastic members is improved.

In a preferable first aspect of the present invention, the rubbery elastic members are made of a rubber composition containing cobalt acetyl acetonate, whereby there are the effects that the vulcanization process is shortened and the bonding strength is improved.

In a preferred second aspect of the present invention, by using, as the rubbery elastic members, a rubber composition comprising a diene-based rubber, with cobalt acetyl acetonate or without cobalt acetyl acetonate, and using a specific ratio of carbon black and silica and further a specific amount, with respect to the silica, of a silane coupling agent, it is possible to improve the heat aged bondability of the rubbery elastic members to the ring-shaped metal shell (e.g., a steel, stainless steel, etc.) and its durability.

### BRIEF DESCRIPTION OF THE DRAWINGS

Fig. 1 is a cross-sectional view along the meridial direction showing principal parts of an embodiment of the tire wheel assembly of the present invention.
Fig. 2 is a cross-sectional view along the meridial direction showing principal parts of another embodiment of the tire wheel assembly of the present invention.
Fig. 3 is a cross-sectional view along the meridial direction showing principal parts of still another embodiment of the tire wheel assembly of the present invention.
Fig. 4 is a view of an example of the bonding surfaces between the ring-shaped metal shell and the rubbery elastic members of the tire wheel assembly of the present invention.

### BEST MODE FOR CARRYING OUT THE INVENTION

The singular forms ("a", "an", and "the") used in the description and the attached claims should be understood as including the plural form unless otherwise clear from the context.

According to the first aspect of the present invention, there is provided a run flat tire wheel assembly having a run flat support member formed by a high rigidity metal shell and rubbery elastic members, wherein the rubbery elastic members are composed of a diene-based rubber in an amount of 100 parts by weight and cobalt acetyl acetonate in an amount of 0.1 to 5 parts by weight, preferably 0.5 to 3 parts by weight, whereby the bondability to the ring-shaped metal shell is improved. More preferably, by securing a predetermined contact area, it is possible to impart, to the run flat support member, a bonding strength capable of sufficiently withstanding the load at the time of assembly on the rim or run flat driving.

According to the second aspect of the present invention, there is provided a run flat tire wheel assembly having a run flat support member formed by a high rigidity metal shell and rubbery elastic members, wherein the rubbery elastic members are composed of a diene-based rubber in an amount of 100 parts by weight and a reinforcing filler composed of carbon black and silica in a ratio of carbon black/silica (weight ratio) of 10/1 to 1/2, preferably 6/1 to 1/2, in a total amount of 40 to 90 parts by weight, preferably 60 to 80 parts by weight and a silane coupling agent in an amount, based upon the weight of the silica, of 1 to 20% by weight, preferably 5 to 15% by weight, more preferably including the cobalt acetyl acetonate in an amount, based upon 100 parts by weight of the diene-based rubber, of 0.1 to 5 parts by weight, particularly preferably 0.5 to 3 parts by weight, whereby a tire wheel assembly having the improved bondability to the ring-shaped metal shell can be obtained. More preferably, by securing a predetermined contact area, it is possible to impart, to the run flat support member, a bonding strength capable of sufficiently withstanding the load at the time of assembly on the rim or run flat driving.

The present inventors tried to improve the bondability of the ring-shaped metal shell and the rubbery elastic members of a run flat support member. During that time, the inventors found that, to bond steel and rubber, normally a predetermined effect can be obtained by plating brass, etc. on the steel side. Further, the inventors attempted to improve the bondability by using an indirect adhesive or applying special surface treatment, but each technique involved time and cost, and therefore there were many disadvantageous points in practice. Further, it is also possible to make the rubber compound a high sulfur content formulation to enable direct bonding with iron, but there was a problem of poor heat aging resistance due to the high sulfur content. Therefore, for the purpose of improving the heat aging resistance, the inventors studied using silica and a silane coupling agent, instead of using carbon black, for reinforcement and, as a result, observed an effect of improvement, whereby the present invention was completed.

The present invention will now be explained more specifically by embodiments shown in the drawings.

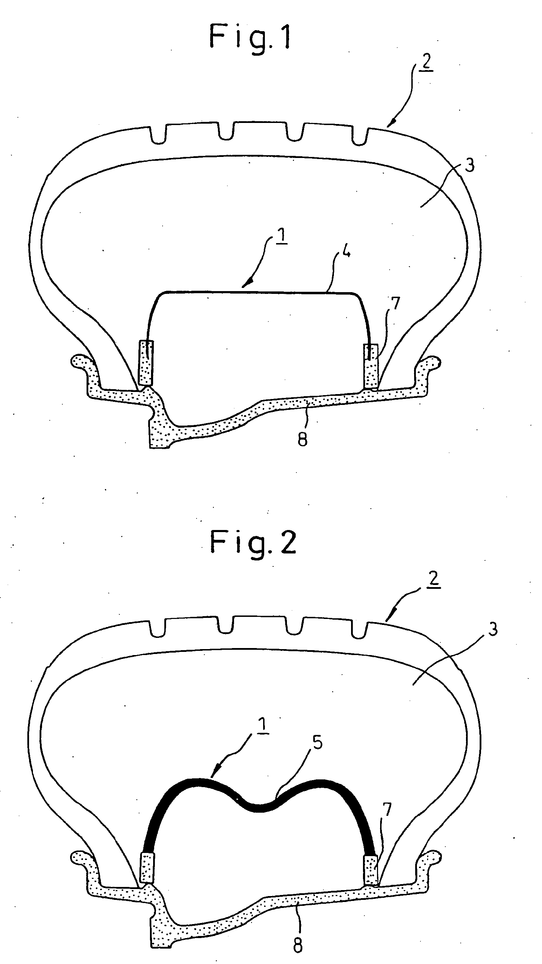

Fig. 1, Fig. 2 and Fig. 3 are cross-sectional views along the meridial direction showing principal parts of a typical embodiment of the tire wheel assembly (wheels) of the present invention.

For example, as shown in Fig. 1, Fig. 2 and Fig. 3, the run flat support member 1 according to the present invention is formed from a ring-shaped metal shell 4, 5, or 6 inserted into a cavity 3 of a pneumatic tire 2 and rubbery elastic members 7. This run flat support member 1 is formed into a shape having an outside diameter smaller than the inside diameter of the cavity 3 so as to maintain a certain distance from the inside surface of the cavity 3 of the pneumatic tire 2 and having an inside diameter of substantially the same dimension as the inside diameter of the bead portion of the pneumatic tire. The run flat support member 1 is inserted inside the pneumatic tire 2 and in that state mounted over the rim 8 of the wheel together with the pneumatic tire 2, whereby the wheel assembly is formed. If this tire wheel assembly is mounted on an automobile, etc. and the pneumatic tire is punctured during driving, the punctured, collapsing tire 2 is supported at the outer circumference of the run flat support member 1 and run flat driving becomes possible in that state.

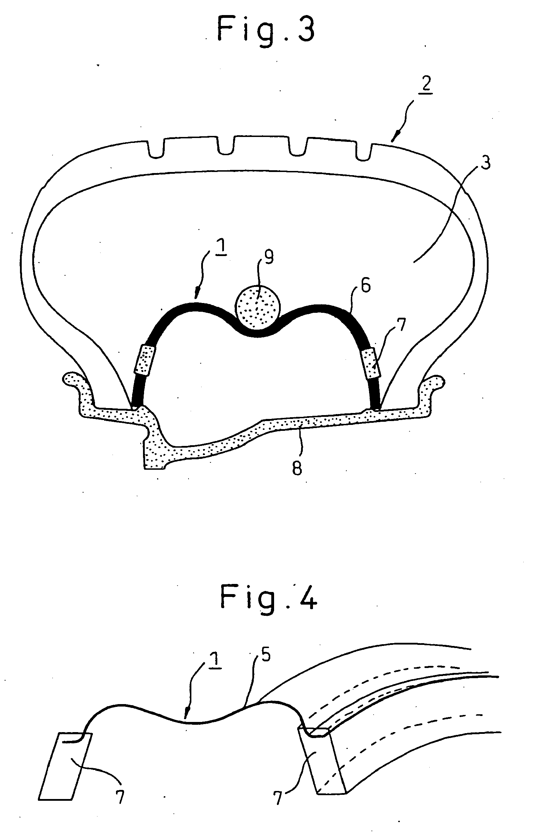

As explained above, the run flat support member of the tire wheel assembly of the present invention is composed of a ring-shaped metal shell and rubbery elastic members. The ring-shaped metal shell 4, 5 or 6 forms a continuous support surface at the outside thereof so as to support a punctured or otherwise damaged tire and forms legs by the left and right side walls thereof at the inside. The outside support surface can be shaped in various ways. For example, a flat surface as shown in Fig. 1, a surface of a shape in the lateral cross-section perpendicularly intersecting the circumferential direction projecting outward as shown in Fig. 2 (Note: surface with two projecting surfaces arranged in the axial direction of the tire as shown in Fig. 2 or a surface with three or more or a surface with just one), and further a shape composed of two or more projecting surfaces and having a circular cross-section elastic ring 9 arranged in a recess to impart the capability to buffer the shock at the time of run flat driving as shown in Fig. 3 and/or separated from the ring-shaped metal shell by a rubbery elastic members, so that the side walls of the metal shell directly abut against the rim and enable a stable engagement state to be maintained, etc. may be used. In this way, even when forming a support surface, the bonding between the metal and the rubbery elastic members is increased according to the present invention and, therefore, it is possible to increase the sustained tire run flat driving distance.

The rubbery elastic members are attached to the ends of the two legs of the ring-shaped metal shell (see Fig. 1 or Fig. 2) or in the two legs (see Fig. 3) and support the ring-shaped metal shell by abutting against the left and right rims. The rubbery elastic members are composed of rubber, ease the impact or vibration received from the punctured or other damaged tire by the ring-shaped metal shell, act to stop sliding with respect to the rim and stably support the ring-shaped metal shell on the rim.

As shown in Fig. 4, the ring-shaped metal shell 5 and rubbery elastic member 7 forming the run flat support member 1 have a strong bonding strength, but preferably the predetermined contact area is secured. The load at the time of the rim work or time of run flat driving is made dimensionless by the rim radius R (inch). When the contact area is S (cm²), the ratio S/R should be 4.5 cm²/inch or more, preferably 8 to 20 cm²/inch. Here, the "contact area" means the contact area between the metal and the rubbery elastic members at the end of one side of the ring-shaped metal shell, that is, the entire contact area of one turn in the circumferential direction of the front/back surfaces and end faces of the metal shell where the ring-shaped metal shell contacts the rubbery elastic members in the lateral cross-section perpendicularly intersecting the circumferential direction.

Further, the bonded surfaces of the ring-shaped metal shell 5 and the rubbery elastic members 7 should be formed in the axial direction and the radial direction. It is more preferable that the two be substantially equal. By this, a structure able to withstand both force in the axial direction and radial direction occurring at the time of run flat driving is formed.

In Figs. 1, 2, and 3, the run flat support member 1, pneumatic tire 2, and rim 8 are formed coaxially in a ring about the shaft of the wheel (not shown in the drawings). Note that the metal shell is not particularly limited in dimensions, but preferably the thickness is 0.5 to 3.0 mm and the width is substantially equal to the distance between the left and right tire bead toes.

The tire wheel assembly of the present invention is designed to support the weight of an automobile etc. through a punctured or other damaged tire, and therefore the ring-shaped metal shell 4, 5 or 6 is composed of a metal material. As such a metal, iron, stainless steel, aluminum alloy, etc. may be mentioned.

In the present invention, the rubbery elastic members stably support the ring-shaped metal shell and improve the bondability to the ring-shaped metal shell and can be composed of a high sulfur content diene-based rubber. As the diene-based rubber usable in the present invention, natural rubber, polyisoprene rubber, styrenebutadiene copolymer rubber, polybutadiene rubber, butyl rubber, chloroprene rubber, acrylonitrile butadiene rubber, etc. may be mentioned. These may be used alone or in any blend thereof.

In the first aspect of the present invention, to improve the bondability of the ring-shaped metal shell and the rubber elastic members, the rubbery elastic members are composed of 100 parts by weight of a diene-based rubber, into which cobalt acetyl acetonate is compounded in an amount of 0.1 to 5 parts by weight, preferably 0.5 to 3 parts by weight. If the compounded amount is too small, the desired adhesive effect cannot be obtained, while conversely if too large, the increase in the bonded interface leads to unpreferable drop in the bonding strength. As the cobalt acetyl acetonate usable in the present invention, Co(acac)₂ (wherein, "ac" indicates an acetyl acetonate group) or Co(acac)₃ are exemplified. These are known compounds commercially available from Kishida Chemical. Note that organic acid cobalt (for example, cobalt naphthenate, borate neodecanoate, rosinate, etc.) may be used in an amount, as cobalt, of 0.1 to 5 parts by weight.

In the second aspect of the present invention, to improve the durability of the ring-shaped metal shell 5 and the rubbery elastic members 7, the rubbery elastic members 7 are made using a diene-based rubber in an amount of 100 parts by weight, a predetermined amount of the cobalt acetyl acetonate used in the first aspect and, or instead of using cobalt acetyl acetonate, as explained above, a specific amount of carbon black, silica, or a silane coupling agent. In the compounding of the carbon black and silica of the rubber composition used in the present invention, if the ratio of blending of the carbon black is too large, the heat buildup becomes unpreferably higher and deterioration of the rubber or bonding interface is unpreferably promoted, while conversely if the ratio of blending of the silica is too large, the workability deteriorates and therefore the production efficiency is unpreferably decreased. Further, if the total compounding amount of the carbon black and the silica is too large, the dispersability declines, and the desired characteristics cannot be obtained, and therefore, this is not preferable, while conversely if too small, the reinforcibility is unpreferably decreased. According to the present invention, further, a specific amount of a silane coupling agent is compounded into the rubber composition. If the compounding amount is too small, the bonding between the silica and the rubber is not sufficient and the reinforcing ability and heat buildup resistance are unpreferably decreased. Conversely, if too large, the excess blending of the coupling agent unpreferably results in the plastic effect becoming greater.

The carbon black and silica usable in the second aspect of the present invention may be those capable of compounding into rubber products, in particular a tire rubber composition. As the carbon black, preferably the N300 series (HAF) or N500 series (FEF) of the ASTM code may be used. For example, N330, N339, N550, etc. may be mentioned. These may be used alone or in any combinations thereof. On the other hand, as the silica, any silica can be used if the grade of a particle size used as a filler for reinforcing rubber.

The silane coupling agent usable in the rubber composition according to the second aspect of the present invention may be any silane coupling agent capable of blending into a rubber composition for a tier and another rubber product. As preferable specific examples, bis(3-triepoxysilylpropyl)tetrasulfide, bis(3-triepoxysilylpropyl)disulfide, etc. may be exemplified.

According to a preferred aspect of the second aspect of the present invention, to the ingredient (B) (ii) 1 to 10 parts by weight, preferably 2 to 8 parts by weight, of sulfur, based upon 100 parts by weight of the diene-based rubber, can be compounded, so as to increase the reinforcing ability of the silica and rubber and to : obtain a further effect of improvement of the bondability with metal.

The rubber composition of the present invention may include, insofar as not contravening the object of the present invention, other additives generally blended into rubber compositions in the past in the amounts and by the methods in the past.

The rubber composition usable in the present invention may have blended thereto, in addition to the essential ingredients, carbon black, silica or another filler, various oils, an antioxidant, a plasticizer, a silane coupling agent, or other various additives generally used for rubber use. The formulation may be mixed by a general method to obtain a composition usable for vulcanization. The amounts of these additives added can be made the conventional general amounts in so far as the object of the present invention is not contravened.

### EXAMPLES

Examples will now be used to explain the present invention further, but the present invention is by no means limited in scope to these Examples.

### Examples 1 to 4 and Comparative Examples 1 to 4

The effects of the present invention will be demonstrated using rubbery elastic members of the formulations (parts by weight) shown in Table I.

Rubbery elastic member samples (dimensions: 5.5 mm thickness x 2.5 cm width x 8 cm length) of the formulations (parts by weight) shown in Table I were prepared (the ingredients other than the sulfur and vulcanization accelerator were first mixed by a Banbury mixer until a temperature of 150°C, then the sulfur and vulcanization accelerator were added and the result and composition mixed at 80°C for 3 minutes). Each sample was heat bonded to a plate (iron) at 150°C over 60 minutes. The results are shown in Table I.

**Table I**

| | | Comp. Ex. 1 | Comp. Ex. 2 | Comp. Ex. 3 | Comp. Ex. 4 | Ex. 1 | Ex. 2 | Ex. 3 | Ex. 4 |
|---|---|---|---|---|---|---|---|---|---|
| Formulation (parts by weight) | | | | | | | | | |
| Natural rubber¹ | | 100 | 100 | 100 | 100 | 100 | 100 | 100 | 100 |
| Carbon black^{*2} | | 50 | 50 | 50 | 50 | 50 | 50 | 50 | 50 |
| Zinc white^{*3} | | 5 | 5 | 5 | 5 | 5 | 5 | 5 | 5 |
| Antioxidant^{*4} | | 1 | 1 | 1 | 1 | 1 | 1 | 1 | 1 |
| Cobalt naphthenate^{*5} | | 0.5 | 2 | 3 | 4 | - | - | - | - |
| Co(acac)₃^{*6} | | - | - | - | - | 0.31 | 1.23 | 1.79 | 2.40 |
| (Co element content)^{*7} | | (0-.05) | (0.2) | (0.3) | (0.4) | (0.05) | (0.2) | (0.3) | (0.4) |
| Alkyl phenol resin^{*8} | | 0 | 2 | 4 | 5 | 0 | 2 | 4 | 5 |
| Sulfur^{*9} | | 5 | 5 | 5 | 5 | 5 | 5 | 5 | 5 |
| Rheometer 150°C | T₁₀ | 0 (standard) | -0'20" | -0'35" | -1'00" | -2'20" | -2'35" | -2'400" | -2'35" |
| | T₉₀ | 0 (standard) | -1'15" | -2'05" | -2'30" | -10'30" | -12'20" | -15'10" | -16'15" |
| | MH | 100 | 102 | 105 | 115 | 110 | 126 | 138 | 143 |
| Initial bonding | strength | 100 | 125 | 147 | 181 | 189 | 250 | 261 | 317 |
| | Rubber coverage [%] | 30 | 70 | 100 | 100 | 100 | 100 | 100 | 100 |
| Heat aged bonding | Peeling strength Rubber coverage [%] | 100 | 132 | 100 | 160 | 178 | 287 | 356 | 449 |
| | | 0 | 30 | 80 | 100 | 100 | 100 | 100 | 100 |
| Durability test | | 100 | - | - | - | 101 | 105 | 115 | 120 |

| | | | | | | | | | |
|---|---|---|---|---|---|---|---|---|---|
| Notes of Table I ^{*}1: RSS#3 ^{*}2: Shoblack N220 manufactured by Showa Cabot ^{*}3: Zinc Oxide #3 manufactured by Seido Chemical Industry ^{*}4: Phenylene diamine-based anti-aging agent Santoflex 6PPD manufactured by Flexsys ^{*}5: Cobalt naphthenate (Co content 10%) manufactured by Dainippon Ink & Chemicals ^{*}6: Cobalt acetyl acetonate (III) manufactured by Kishida Chemical ^{*}7: Total amount of cobalt element included in Co(acac)₃ and cobalt naphthenate ^{*}8: Hitachi Chemical Hitanol 2501Y ^{*}9: Insoluble sulfur manufactured by Hosoi Chemical Industry | | | | | | | | | |

The test methods for the evaluated physical properties were as follows.

Rheometer: Rubber 10% vulcanization degree (T₁₀) and 90% vulcanization degree (T₉₀) found from vulcanization curve measured using a Disk Rheometer of Toyoseiki. The maximum torque was shown indexed to Comparative Example 1 as 100 (MH).

Peeling strength: Measured based on JIS K6256 test method of bonding of vulcanized rubber and thermoplastic rubber. Shown indexed to value of Comparative Example 1 as 100. The larger the numerical value, the better the bondability (heat aging conditions: 80°C x 192 hours).

Rubber coverage (%): Shows rubber coverage of surface of plate after peeling. No rubber coverage at all indicated as 0%, while complete rubber coverage indicated as 100%.

### Durability Test

A 2500 cc passenger car was fitted with the test tires (205/55R16 89V, rim size 16 x 6 1/2JJ) and driven with the air pressure inside the front right tire set to 0 kPa and the air pressure inside the other three tires set to 200 kPa at 90 km/h until breakdown. The results are shown indexed to the value of Comparative Example 1 as 100. The larger the numeral value, the better the durability.

As shown in Table I, according to the present invention, it is learned that by blending a specific amount of an organic acid cobalt, sulfur, a resol type alkyl phenol resin, carbon and a phenylene diamine-based antioxidant into the diene-based rubber, the rubber coverage of the plate surface becomes good and the peeling strength becomes stronger.

### Standard Example 1, Examples 5 to 12, and Comparative Example 5

Rubbery elastic members composed of rubber compositions having the formulations shown in Table II were used to demonstrate the effect of the present invention. That is, rubbery elastic member samples (dimensions: 5.5 mm thickness x 2.5 cm width x 8 cm length) of the formulations (parts by weight) shown in Table II were prepared (i.e., the ingredients other than the sulfur and vulcanization accelerator were first mixed by a Banbury mixer until a temperature of 150°C, then the sulfur and vulcanization accelerator were added and the resultant composition mixed at 80°C for 3 minutes). Each sample was heat bonded to a plate (iron) at 150°C over 60 minutes. The samples obtained were tested by the following methods. The results are shown in Table II.

### Peeling Test

Measured based on JIS K6256 test method of bonding the vulcanized rubber and the thermoplastic rubber.

Peeling strength: Shown indexed to value of Standard Example 1 as 100. The larger the numerical value, the better the bondability.

Rubber coverage (%): Shows rubber coverage of surface of plate after peeling. No rubber coverage at all indicated as 0%, while complete rubber coverage indicated as 100%.

### Evaluation of Actual Durability on Vehicle

Using tires of sizes of 205/55R16 89V and rims of sizes of 16 x 6 1/2JJ, tire wheel assemblies of the present invention (Standard Example 1 and Examples 5, 7, 9, and 11) and a conventional tire wheel assembly of Comparative Example 5 were prepared.

A 2500 cc passenger car was fitted with each of the test tires and driven with the air pressure inside the front right tire set to 0 kPa and the air pressure inside the other three tires set to 200 kPa at 90 km/h until breakdown. The results are shown in Table II indexed to the value of Standard Example 1 as 100. The larger the numeral value, the better the durability.

**Table II**

| | | Standard Ex. 1 | Ex. 5 | Ex. 6 | Ex. 7 | Ex. 8 | Ex. 9 | Ex. 10 | Ex. 11 | Ex. 12 | Comp. Ex. 5 |
|---|---|---|---|---|---|---|---|---|---|---|---|
| Formulation (parts by weight) | | | | | | | | | | | |
| RSS#3 | | 100 | 100 | 100 | 100 | 100 | 100 | 100 | 100 | 100 | 100 |
| Asahi #60 | | 70 | 60 | 60 | 50 | 50 | 40 | 40 | 30 | 30 | 20 |
| Nipsil AQ | | - | 10 | 10 | 20 | 20 | 30 | 30 | 40 | 40 | 50 |
| Si69 | | - | 1.5 | 1.5 | 3 | 3 | 4.5 | 4.5 | 6 | 6 | 7.5 |
| Zinc White #3 | | 5 | 5 | 5 | 5 | 5 | 5 | 5 | 5 | 5 | 5 |
| Santoflex 6PPD | | 1 | 1 | 1 | 1 | 1 | 1 | 1 | 1 | 1 | 1 |
| Co(acac)₃ | | 2 | 2 | 2 | 2 | 2 | 2 | 2 | 2 | 2 | 2 |
| Alkyl phenol resin | | 5 | 5 | 5 | 5 | 5 | 5 | 5 | 5 | 5 | 5 |
| Sulfur | | 5 | 5 | 2.5 | 5 | 2.5 | 5 | 2.5 | 5 | 2.5 | 5 |

| Evaluated physical properties | | | | | | | | | | | |
|---|---|---|---|---|---|---|---|---|---|---|---|
| Initial bonding | Peeling | 100 | 106 | 101 | 108 | 106 | 105 | 104 | 105 | 100 | 80 |
| | strength | | | | | | | | | | |
| | Rubber | 100 | 100 | 100 | 100 | 100 | 100 | 100 | 100 | 100 | 100 |
| | coverage [%] | | | | | | | | | | |
| Heat aged bonding | Peeling | 100 | 119 | 123 | 122 | 132 | 117 | 119 | 125 | 121 | 90 |
| | strength | | | | | | | | | | |
| | Rubber | 60 | 85 | 85 | 100 | 100 | 95 | 90 | 95 | 85 | 75 |
| | coverage [%] | | | | | | | | | | |
| Durability | | 100 | 115 | - | 135 | - | 134 | - | 124 | - | 103 |

| | | | | | | | | | | | |
|---|---|---|---|---|---|---|---|---|---|---|---|
| Table II notes RSS#3: Natural rubber Asahi #60: FEF grade carbon black manufactured by Asahi Carbon Nipsil AQ: Silica manufactured by Nippon Silica Industry Si69: Bis-[3-(triepoxysilyl)-propyl]tetrasulfide) manufactured by Degussa Zinc White #3: Zinc oxide manufactured by Seido Chemical Industry Santoflex 6PPD: N-phenyl-N'-(1,3-dimethylbutyl)-p-phenylene diamine manufactured by Flexsys Co(acac)₃: Cobalt acetyl acetone (III) manufactured by Kishida Chemical Alkyl phenol resin: Hitanol 2501Y manufactured by Hitachi Chemical Sulfur: Insoluble sulfur manufactured by Sanshin Chemical Industry | | | | | | | | | | | |

### INDUSTRIAL APPLICABILITY

As explained above, in the past, bonding between a metal such as iron or stainless steel poor in bondability with rubber alone and the rubbery elastic members was extremely difficult. Even if bonding was possible, often the bond was insufficient strength-wise or the durability over time was poor, but according to the present invention, by forming the rubbery elastic members from a rubber composition containing (A) a diene-based rubber in an amount of 100 parts by weight and (B) (i) cobalt acetyl acetonate in an amount of 0.1 to 5 parts by weight and/or (B) (ii) carbon black, silica, and a silane coupling agent and in some cases sulfur in specific amounts, the bondability between the ring-shaped metal shell and the rubbery elastic members is improved and the durability as a run flat support member is greatly improved.

### LIST OF REFERENCES

- 1: Run flat support
- 2: Pneumatic tire
- 3: Cavity
- 4: Ring-shaped metal shell
- 5: Ring-shaped metal shell
- 6: Ring-shaped metal shell
- 7: Rubbery elastic member
- 8: Rim
- 9: Elastic ring

## Claims

1. A run flat tire wheel assembly comprising a run flat support member (1) formed by a ring-shaped metal shell (4) and rubbery elastic members (7) in an inside cavity (3) of a tire/rim, wherein said rubbery elastic member comprises a rubber composition comprising (A) 100 parts by weight of a diene-based rubber and (B) (i) 0.1 to 5 parts by weight of cobalt acetyl acetonate and/or (B) (ii) (a), as a reinforcing filler, 40 to 90 parts by weight of carbon black/silica in a ratio of 10/1 to 1/2 (weight ratio) and (b) 1 to 20% by weight, based upon the weight of said silica, of a silane coupling agent, whereby the bondability between the ring-shaped metal shell and the rubbery elastic members is improved.

2. A tire wheel assembly as claimed in claim 1, wherein the component (B) (ii) of the rubber composition further comprises (c) 1 to 10 parts by weight of sulfur, based upon 100 parts by weight of diene-based rubber.

3. A tire wheel assembly as claimed in claim 1 or 2, wherein the rubbery elastic members of the run flat support member are arranged between the ring-shaped metal shell and the rim and have a structure for supporting the ring-shaped metal shell.

4. A tire wheel assembly as claimed in any one of claims 1 to 3, wherein the new material of the ring-shaped metal shell is steel or stainless steel.

5. A tire wheel assembly as claimed in any one of claims 1 to 4, wherein, when the nominal radius of the tire is R (inch) and the contact area of the rubbery elastic member/the metal is S (cm²), the ratio S/R thereof is 4.5 cm²/inch or more.

6. A tire wheel assembly as claimed in any one of claims 1 to 5, wherein the bonded surfaces are composed of surfaces in the substantially axial direction and surfaces in the substantially radial direction.

## Patentansprüche

1. Notlaufreifen-Radaufbau, umfassend ein Notlaufunterstützungselement (1), das aus einer ringförmigen Metallhülle (4) und gummiartigen elastischen Elementen (7) in einem Innenhohlraum (3) eines Reifens/Radkranzes ausgebildet ist, bei dem das gummiartige elastische Element eine Gummizusammensetzung umfasst, umfassend (A) 100 Gewichtsteile von Gummi auf Dienbasis und (B) (i) 0,1 bis 5 Gewichtsteile von Kobaltazetylacetonat und/oder (B) (ii) (a) als ein Verstärkungsfüller, 40 bis 90 Gewichtsteile von Ruß/Silica in einem Verhältnis von 10/1 bis 1/2 (Gewichtsverhältnis) und (b) 1 bis 20 Gew-%, basierend auf dem Gewicht von dem Silica, von einem Silan-Haftvermittler, wodurch die Verbindbarkeit zwischen der ringförmigen Metallhülle und dem gummiartigen elastischen Element verbessert ist.

2. Reifen-Radaufbau nach Anspruch 1, bei dem die Komponente (B) (ii) der Gummizusammensetzung ferner (c) 1 bis 10 Gewichtsteile Schwefel umfasst, basierend auf 100 Gewichtsteilen von Gummi auf Dienbasis.

3. Reifen-Radaufbau nach Anspruch 1 oder 2, bei dem die elastischen Gummielemente des Notlaufunterstützungselements zwischen der ringförmigen Metallhülle und dem Radkranz angeordnet sind und eine Struktur zum Unterstützen der ringförmigen Metallhülle aufweisen.

4. Reifen-Radaufbau nach einem der Ansprüche 1 bis 3, bei dem das neue Material der ringförmigen Metallhülle Stahl oder Edelstahl ist.

5. Reifen-Radaufbau nach einem der Ansprüche 1 bis 4, bei dem, wenn der Nominalradius des Reifens R (Inch) ist und die Kontaktfläche des gummiartigen elastischen Elements/des Metalls S (cm²) ist, das Verhältnis S/R davon 4,5 cm²/Inch oder mehr beträgt.

6. Reifen-Radaufbau nach einem der Ansprüche 1 bis 5, bei dem die gebundenen Oberflächen aus Oberflächen in der im Wesentlichen axialen Richtung und Oberflächen in der im Wesentlichen radialen Richtung zusammengesetzt sind.

## Revendications

1. Ensemble pneumatique-roue plat de roulement comprenant un élément de support plat de roulement (1) formé par une coque métallique annulaire (4) et des éléments élastiques en caoutchouc (7) dans une cavité intérieure (3) d'un pneumatique/jante, où ledit élément élastique en caoutchouc comprend une composition de caoutchouc comprenant (A) 100 parties en poids d'un caoutchouc à base de diène et (B) (i) 0,1 à 5 parties en poids de cobalt acétyl acétonate et/ou (B) (ii) (a), comme charge de renforcement, 40 à 90 parties en poids de noir de carbone/silice en un rapport de 10/1 à 1/2 (rapport pondéral) et (b) 1 à 20% en poids, basé sur le poids de ladite silice, d'un agent de couplage de silane, par quoi l'aptitude à la liaison entre la coque métallique annulaire et les éléments élastiques en caoutchouc est améliorée.

2. Ensemble pneumatique-roue selon la revendication 1, où le composant (B) (ii) de la composition de caoutchouc comprend en outre (c) 1 à 10 parties en poids de soufre, basé sur 100 parties en poids de caoutchouc à base de diène.

3. Ensemble pneumatique-roue selon la revendication 1 ou 2, où les éléments élastiques en caoutchouc de l'élément de support plat de roulement sont agencés entre la coque métallique annulaire et la jante et ont une structure pour supporter la coque métallique annulaire.

4. Ensemble pneumatique-roue selon l'une quelconque des revendications 1 à 3, où le nouveau matériau de la coque métallique annulaire est l'acier ou l'acier inoxydable.

5. Ensemble pneumatique-roue selon l'une quelconque des revendications 1 à 4, où lorsque le rayon nominal du bandage est R (pouce) et la zone de contact de l'élément élastique en caoutchouc/le métal est S (cm²), le rapport S/R de ceux-ci est de 4,5 cm²/pouce ou plus.

6. Ensemble pneumatique-roue selon l'une quelconque des revendications 1 à 5, où les surfaces liées sont composées de surfaces dans la direction sensiblement axiale et de surfaces dans la direction sensiblement radiale.
